# EUROPÄISCHE PATENTSCHRIFT

(11) **EP 1 754 021 B1**
(45) Veröffentlichungstag und Bekanntmachung des Hinweises auf die Patenterteilung: **19.11.2008**
(21) Anmeldenummer: 05754349.8
(22) Anmeldetag: 20.05.2005
(51) Int. Cl.: G01D 5/20, G01D 5/244, G01D 3/032

(54) **VERFAHREN ZUR FEHLERKORREKTUR EINES WEGSENSORSIGNALS**
ERROR CORRECTION METHOD FOR A RANGE SENSOR
PROCEDE POUR CORRIGER LES ERREURS D'UN SIGNAL DE DETECTION DE TRAJECTOIRE

(30) Priorität: 21.05.2004 DE 102004025156
(43) Veröffentlichungstag der Anmeldung: 21.02.2007
(73) Patentinhaber: KNORR-BREMSE SYSTEME FÜR NUTZFAHRZEUGE GMBH, 80809 München (DE)
(72) Erfinder: MILLER, Bernhard, 71263 Weil der Stadt (DE)
(74) Vertreter: Schönmann, Kurt
(86) Internationale Anmeldenummer: PCT/EP2005/005475
(87) Internationale Veröffentlichungsnummer: WO 2005/114110

(56) Entgegenhaltungen:
- EP-A- 1 353 152
- CH-A- 397 261
- DE-A1- 4 224 225
- DE-A1- 4 320 834
- DE-A1- 19 712 622

## Beschreibung

Die Erfindung betrifft ein Verfahren und eine Vorrichtung zur Fehlerkorrektur eines Signals eines induktiven Wegsensors.

Für die Wegmessung in Kraftfahrzeugen werden häufig induktive Wegsensoren eingesetzt, da sie neben der Robustheit gegenüber Umwelteinflüssen wie Temperaturwechsel, Schüttelbeanspruchungen und Verschmutzung auch relativ preisgünstig herzustellen sind.

Werden in der Nähe eines solchen induktiven Wegsensors elektromagnetische Bauelemente z.B. Magnetventile verwendet, so tritt häufig eine störende Beeinflussung des Sensors bei Betätigung eines Magnetventils auf.

Um diese störenden Messfehler des Sensors zu minimieren, gibt es verschiedene Möglichkeiten.

Im Stand der Technik werden häufig Sensoren mit einer metallischen Schirmhülse umgeben, um äußere elektromagnetische Wechselfelder abzuschirmen bzw. auf ein akzeptables Maß zu reduzieren. Diese Schirmhülsen vergrößern und verteuern jedoch den Sensor. Während die Sensoren aus einer Spule und einer sie umgebenden gespritzten Kunststoffumhüllung bestehen und damit ein geringes Eigengewicht besitzen, werden die Schirmhülsen aus einem vergleichsweise dicken und damit schweren Stahlmantel hergestellt.

Häufig werden diese Schirmhülsen aus schwierig zu bearbeitendem und damit zusätzlich verteuerndem Material gefertigt.

In der Patentanmeldung DE 100 51 048 A1 wird ein Verfahren beschrieben, eine solche störende Beeinflussung äußerer Magnetfelder auf einen induktiven Sensor dadurch zu verhindern, dass der Zeitpunkt des Einlesens des Sensorwertes mit den Ansteuerzeiten der Magnetventile so abgestimmt wird, dass der Messzeitpunkt des Sensors immer außerhalb der Ansteuerzeiten der Magnetventile liegt.

Dies ist jedoch nur möglich, wenn es ausreichend häufige und zeitlich entsprechend lange Ruhezeiten der Magnetventilansteuerungen gibt, in denen eine Sensorwerterfassung stattfinden kann. Nachteile bezüglich der dynamischen Folgegeschwindigkeit bei schnellen Sensorwertänderungen sind die Folge.

Neben der Beeinflussung durch elektromagnetische Felder sind auch Störungen durch elektrische Felder auf den induktiven Wegsensor möglich.

Die deutsche Patentschrift 43 18 263 beschreibt ein Verfahren und eine Schaltung zum temperaturkompensierten Anfahren mehrerer vorgegebener Positionen. Kerngedanke dieser Patentschrift ist, für eine genaue Positionsregelung nicht den verwendeten Wegsensor zu kompensieren, sondern umgekehrt den für die anzufahrende Soll-Positionen zu erwartenden Sensorwert, gemäß den jeweils herrschenden Temperaturen, vorauszuberechnen und dann auf diesen Wert zu positionieren.

Der Erfindung liegt die Aufgabe zugrunde, ein Verfahren und eine Vorrichtung zu gestalten, die es ermöglichen, auf eine teure Schirmhülse zu verzichten und gleichzeitig unabhängig von eventuellen Magnetventilbetätigungen permanent Sensorsignalwerte zu erfassen und auszugeben. Dabei sollen mit der Sensorauswertung die oben beschriebenen Störeinstreuungen beseitigt oder zumindest auf ein akzeptables Maß reduziert werden.

Diese Aufgabe wird gelöst durch ein Verfahren mit den Merkmalen des Anspruchs 1 und eine Vorrichtung mit den Merkmalen des Anspruchs 13. Vorteilhafte Ausgestaltungen ergeben sich aus den Unteransprüchen.

Bei dem erfindungsgemäßen Verfahren zur Korrektur eines durch elektromagnetische Einstreuungen bedingten Fehlers eines Signals eines induktiven Weg- oder Winkelsensors wird bei bekannter Aktivierung mindestens eines elektromagnetische Einstreuungen hervorrufenden Bauteils und einem daraus resultierenden bekannten Fehler im Sensorsignal des induktiven Weg- oder Winkelsensors das gemessene Sensorsignal um den Fehler korrigiert. Dies bietet gegenüber dem Stand der Technik den Vorteil, zu jeder Zeit brauchbare Sensorsignale mit hoher Folgegeschwindigkeit bei schnellen Wegänderungen verfügbar zu haben, ohne eine teuere und Platz beanspruchende Abschirmhülse aufwenden zu müssen.

Diese Vorteile der Erfindung kommen bei einem Magnetventil als elektromagnetische Einstreuungen hervorrufendes Bauteil besonders gut zum Tragen.

In einer vorteilhaften Ausgestaltung der Erfindung steuert ein Mikrocontroller sowohl den Sensor als auch das mindestens eine Bauteil. Dadurch werden Elektronikkomponenten und Anschlussleitungen eingespart. In einer Variante hierzu steuert der Mikrocontroller zwar nicht das mindestens eine Bauteil, aber er erfasst seine Ansteuerungssignale und wertet sie aus.

Vorteilhafter Weise ist ein Fehlerkorrekturwert als zeitabhängige Kennlinie abgelegt. Auf diese Art kann ein reproduzierbarer systematischer Fehler mit hoher Verlässlichkeit mit hinreihender Genauigkeit korrigiert werden.

Der Korrektkurwert ist vorzugsweise von der Höhe der Ansteuerspannung des Bauteils abhängig. Denn eine höhere Ansteuerspannung des Bauteils führt in der Regel zu einer höheren Störfeldemission und damit zu einem höheren Fehler. Bei der Ausgestaltung des Bauteils als Magnetventil geht die Höhe der Ansteuerspannung unmittelbar in die Größe des magnetischen Flusses ein und bei gleichen Ansteuerzeiten, d. h. bei gleich schneller Änderung der Gesamtamplitude des magnetischen Flusses ist damit auch die Flussänderung proportional zur Ansteuerspannung. Die Größe der Flussänderung bestimmt wiederum die Höhe des induktiv eingekoppelten Fehlersignals.

In einer alternativen vorteilhaften Ausgestaltung der Erfindung hierzu wird eine Korrekturwertkennlinie adaptiv ermittelt. Systematische Verschiebungen in dem Fehler können durch eine adaptive Anpassung der Fehlerkorrektur besser nachkorrigiert werden.

Vorteilhafter Weise werden bei einer Endstellung des Weges bzw. Winkels die fehlerbedingten Änderungen des Sensorsignals während der Aktivierung des Bauteils als neue Korrekturwerte aufgenommen und abgespeichert. Einer Endstellung des Weges bzw. Winkels entspricht im fehlerfreien Zustand ein unveränderliches Signal. Wird dennoch eine Änderung aufgenommen, so ist diese fehlerbedingt. Auf diese Art kann der durch die Ansteuerung des Bauteils bedingte Fehler des Sensorsignals in einfacher Weise bestimmt werden.

Während der Aktivierung des Bauteils aufgenommene Abweichungen des Sensorsignals werden vorteilhafter Weise zwischengespeichert und als neue Korrekturwertkennlinie übernommen, wenn sich das Sensorwegsignal vor und nach der Aktivierung des Bauteils nicht geändert hat.

Die neu aufgenommenen Korrekturwerte werden dazu vor ihrer Abspeicherung als neue Korrekturwertkennlinie Tiefpass-gefiltert. Damit werden schnelle irreproduzierbare Fehler und statische Ausreißer eliminiert.

In einer bevorzugten Ausführungsform der Erfindung werden Fehlkorrekturwerte für die Ansteuerungen von Grobjustier- und Feinjustier-Magnetventile separat ermittelt.

Vorzugsweise wird bei mehreren Bauteil-Sensor-Einheiten und vergleichbarer Beeinflussung ein ermittelter Korrekturwert für eine Bauteil-Sensor-Einheit auf die übrigen Bauteil-Sensor-Einheiten übertragen. Dadurch kann Rechenzeit und Speicherplatz eingespart werden.

In einer vorteilhaften Ausgestaltung der Erfindung dient das Bauteil zur Einstellung eines Kupplungsstellers. Dabei kann das Bauteil ein Magnetventil sein, das eine pneumatische Betätigung des Kupplungsstellers steuert.

In Zeichnungen ist ein Ausführungsbeispiel der Erfindung dargestellt.

Es zeigen:
- Fig. 1: eine schematische Darstellung eines induktiven Wegsensors mit elektronischer Wegsignalaufbereitung,
- Fig. 2: Diagramme eines fehlerbehafteten Wegsensorsignals, einer zeitlichen Korrekturwertkennlinie, eines Spannungsverlaufs zur Ansteuerung eines Magnetventils sowie eines digitalen Ansteuersignals dieses Magnetventils.

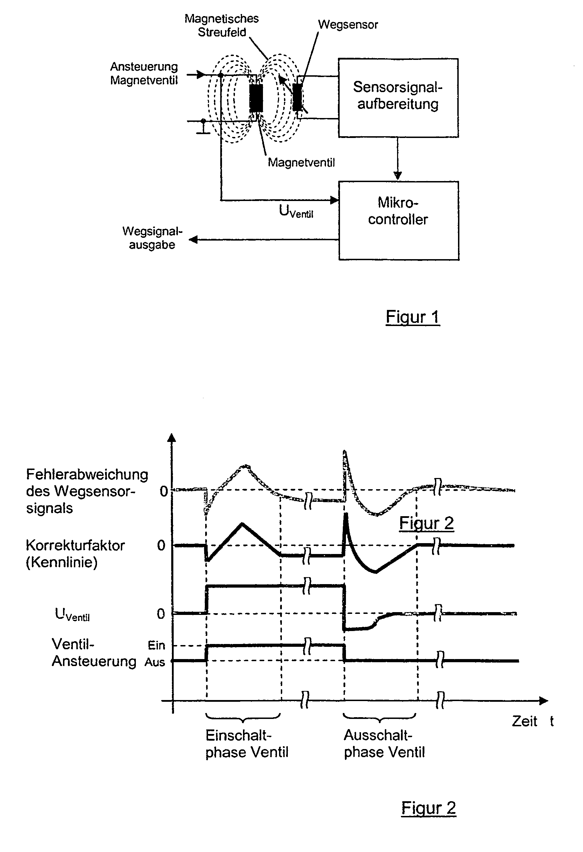

Figur 1 zeigt einen induktiven Wegsensor mit einer elektronischen Wegsignaiaufbereitung, in dessen räumlicher Nähe ein Magnetventil betrieben wird. Die beim Schalten des Magneten des Magnetventils erzeugten elektromagnetischen Streufelder erzeugen in dem induktiven Wegsensor eine Induktionsspannung, die im Messsignal des induktiven Wegsensors ein Fehlersignal verursacht. Ein Mikrocontroller, dem als Eingangswert neben dem aufbereiteten Sensorsignal auch ein Ansteuerungssignal des Magnetventils zu Verfügung steht, kann die Magnetventilansteuerzeiten erkennen und nimmt bei Magnetventilansteuerung eine Fehlerkorrektur vor und gibt ein fehlerbereinigtes Wegsignal aus. Das zum Zeitpunkt eines angesteuerten Magnetventils fehlerhaft eingelesene Wegsignal kann mit einem über der Zeit abgelegtem Korrekturfaktor verrechnet und damit kompensiert werden, so dass das auszugebende Wegsignal trotz anliegender Störeinstreuungen weiterhin nahezu fehlerfrei ausgegeben werden kann.

Figur 2 zeigt in vier Diagrammen von oben nach unten ein fehlerbehaftetes Wegsensor-Rohsignal, eine von einem Mikrocontroller erzeugte zeitliche Korrekturwertfunktion, ein Spannungsverlauf zur Ansteuerung eines Magnetventils und ein digitales Ansteuersignal des Magnetventils. Das Ein- und das Ausschalten des Magnetventils erzeugen jeweils eine Spitze im Signal des Wegsensors mit entgegen gerichteter Polarität. Der Kurvenverlauf gleicht dem einer geglätteten Ableitungsfunktion. Der Korrekturwertverlauf ist dem Fehlersignal in guter Näherung nachempfunden.

Der als Kennlinie über der Zeit abgebildete Korrekturfaktor wird beginnend mit dem Einschalten bzw. Ausschalten des Magnetventils gebildet und vom fehlerhaften Sensorsignal subtrahiert. Dadurch wird die gemessene Fehlerabweichung des Sensorsignals kompensiert und fehlerbereinigt ausgegeben.

Die abgespeicherte zeitliche Kennlinie des Korrekturfaktors ist abhängig vom Magnetventiltyp und der räumlichen Einbaulage zum Sensor. Sie kann somit einmalig ermittelt und im Mikrocontroller abgespeichert werden. Lediglich die Höhe des Korrekturfaktors variiert über der am Magnetventil angelegten Höhe der Ansteuerspannung U_{Ventil}. Durch Erfassen der Ansteuerspannung U_{Ventil} oder der Batteriespannung kann die Korrekturkennlinie in ihrer Amplitude entsprechend angepasst werden (z. B. durch Multiplikation) und damit der Restfehler im Sensorsignal noch weitergehend minimiert werden.

Alternativ zur Fehlerkorrektur mit einer hinterlegten Kennlinie kann die Korrekturfaktorkennlinie auch adaptiv ermittelt werden.

Durch den Einsatz eines Mikrocontrollers besteht im Anwendungsfall des Fehlerkorrekturverfahrens bei einem Kupplungssteller die Möglichkeit einer adaptiven Ermittlung der Fehlerkorrekturkennlinie.

Wenn trotz Ansteuerung der Magnetventile keine Änderung des Wegsignals erfolgt, so kann dies als Zeichen für das Erreichen eines Anschlags, insbesondere im Beispiel des Kupplungsstellers als Erkennung einer bereits geschlossenen oder bis zum Anschlag offenen Kupplung gewertet werden. Werden dann während der Ventilansteuerung die aufgetretenen Abweichungen des Sensorsignals zwischengespeichert, so können diese zwischengespeicherten im zeitlichen Ablauf gemessenen Wegsensorabweichungen bei Feststellen eines stationären Sensorweges als neue Korrekturkennlinie übernommen werden. Eine Tiefpassfilterung für die Übernahme dieser neuen Korrekturwerte ermöglicht einen Schutz vor eventuellen sporadischen Messfehlern. Diese Fehlerkorrekturkennlinie kann jeweils für ein Grob- sowie ein Feinventil separat ermittelt werden, sofern die räumlichen Abstände der beiden Ventile zum Sensor unterschiedlich sind.

Sofern die jeweils anderen Ventile der Kupplung genau den jeweils gleichen räumlichen Abstand zum Sensor besitzen, können diese neuen Korrekturwerte auch auf die anderen Ventile übertragen werden.

## Patentansprüche

1. Verfahren zur Korrektur eines durch von außen einwirkende elektromagnetische Einstreuungen bedingten Fehlers eines Signals eines induktiven Weg- oder Winkelsensors, **dadurch gekennzeichnet, dass** bei bekannter Aktivierung mindestens eines elektromagnetische Einstreuungen hervorrufenden Bauteils und einem daraus resultierenden bekannten Fehler im Sensorsignal des induktiven Weg- oder Winkelsensors das gemessene Sensorsignal um den Fehler korrigiert wird.

2. Verfahren nach Anspruch 1, **dadurch gekennzeichnet, dass** das elektromagnetische Einstreuungen hervorrufenden Bauteil ein Magnetventil ist.

3. Verfahren nach Anspruch 1 oder 2, **dadurch gekennzeichnet, dass** ein Mikrocontroller sowohl den Sensor als auch das mindestens eine Bauteil steuert oder Ansteuerungssignale erfasst und auswertet.

4. Verfahren nach einem der vorstehenden Ansprüche, **dadurch gekennzeichnet, dass** ein Fehlerkorrekturwert als zeitabhängige Kennlinie abgelegt ist.

5. Verfahren nach Anspruch 4, **dadurch gekennzeichnet, dass** der Korrektkurwert von der Höhe der Ansteuerspannung des Bauteils abhängig ist.

6. Verfahren nach einem der Ansprüche 1 bis 3, **dadurch gekennzeichnet, dass** eine Korrekturwertkennlinie adaptiv ermittelt wird.

7. Verfahren nach Anspruch 6, **dadurch gekennzeichnet, dass** bei einer Endstellung des Weges bzw. Winkels die fehlerbedingten Änderungen des Sensorsignals während der Aktivierung des Bauteils als neue Korrekturwerte aufgenommen und abgespeichert werden.

8. Verfahren nach Anspruch 7, **dadurch gekennzeichnet, dass** während der Aktivierung des Bauteils aufgenommene Abweichungen des Sensorsignals zwischengespeichert werden und als neue Korrekturwertkennlinie übernommen werden, wenn bekannt ist, dass sich der tatsächliche Weg vor und nach der Aktivierung des Bauteils nicht geändert hat.

9. Verfahren nach Anspruch 8, **dadurch gekennzeichnet, dass** die neu aufgenommenen Korrekturwerte vor ihrer Abspeicherung als neue Korrekturwertkennlinie Tiefpass-gefiltert werden.

10. Verfahren nach einem der Ansprüche 2 bis 9, **dadurch gekennzeichnet, dass** Fehlerkorrekturwerte für die Ansteuerungen von Grobjustier- und Feinjustier-Magnetventile separat ermittelt werden.

11. Verfahren nach einem der vorstehenden Ansprüche, **dadurch gekennzeichnet, dass** bei mehreren Bauteil-Sensor-Einheiten und vergleichbarer Beeinflussung ein ermittelter Korrekturwert für eine Bauteil-Sensor-Einheit auf die übrigen Bauteil-Sensor-Einheiten übertragen wird.

12. Verfahren nach einem der vorstehenden Ansprüche, **dadurch gekennzeichnet, dass** das Bauteil einen Kupplungssteller einstellt.

13. Vorrichtung zur Einstellung eines Weges oder eines Winkels mit mindestens einem Stell-Bauteil und mindestens einem Weg- bzw. Winkelsensor und mindestens einem Mikrokontroller, **dadurch gekennzeichnet, dass** in dem Mikrokontroller Korrekturkennlinien ablegbar sind, mittels denen bei Aktivierung des mindestens einen Stell-Bauteils durch von außerhalb des Weg- bzw. Winkelsensors einwirkende elektromagnetische Einstreuungen hervorgerufene Fehler im gemessenen Sensorsignal des induktiven Weg- oder Winkelsensors korrigierbar sind.

## Claims

1. Method of correcting errors in the measured sensor signal of an inductive range or angle sensor, which are induced by electromagnetic stray interference acting from outside of said range or angle sensor, **characterised in that** in the event of a known activation of at least one component inducing electromagnetic stray interference and a resulting known error in the sensor signal of said inductive range or angle sensor, said measured sensor signal is corrected by the error.

2. Method according to Claim 1, **characterised in that** said component inducing electromagnetic stray interference is a solenoid valve.

3. Method according to Claim 1 or 2, **characterised in that** a micro controller controls both said sensor and said at least one component or detects and analyses control signals.

4. Method according to any of the preceding Claims, **characterised in that** an error correction value is stored as a characteristic dependent on time.

5. Method according to Claim 4, **characterised in that** said correction value depends on the magnitude of the control voltage of said component.

6. Method according to any of the Claims 1 to 3, **characterised in that** a correction value characteristic is determined in an adaptive approach.

7. Method according to Claim 6, **characterised in that** with a terminal position of the range or angle, respectively, the variations of said sensor signal, which are due to the error, are detected and stored as new correction values during the activation of said component.

8. Method according to Claim 7, **characterised in that** variations of said sensor signal, which are detected during the activation of said component, are temporarily stored and adopted as new correction value characteristic if the actual range prior to and after activation of the component is known to have not changed.

9. Method according to Claim 8, **characterised in that** said newly adopted correction values are subjected to low-pass filtering prior to being stored as new correction value characteristic.

10. Method according to any of the Claims 2 to 9, **characterised in that** error correction values for the control actions are separately determined by rough adjustment and fine adjustment solenoid valves.

11. Method according to any of the preceding Claims, **characterised in that** in the case of several component sensor units and comparable influence, a correction value determined for one component sensor unit is transferred to the remaining component sensor units.

12. Method according to any of the preceding Claims, **characterised in that** said component adjusts a clutch actuator.

13. Device for setting a distance or an angle, comprising at least one actuator component and at least one range or angle sensor and at least one micro controller, **characterised in that** correction characteristics can be stored in said micro controller, by means of which, in the case of activation of said at least one actuator component, errors in the measured sensor signal of said inductive range or angle sensor may be corrected, which are induced by electromagnetic stray interference acting from outside of said range or angle sensor.

## Revendications

1. Procédé à corriger des erreurs d'un signal détecté d'un capteur inductif de position ou d'angle, qui sont induites par interférence électromagnétique agissant de l'extérieur dudit capteur de position ou d'angle, **caractérisé en ce qu'**au cas d'une activation connue d'au moins un composant, qui induit de l'interférence électromagnétique et d'une erreur résultant connue dans le signal dudit capteur inductif de position ou d'angle, ledit signal de capteur détecté est corrigé par l'erreur.

2. Procédé selon la revendication 1, **caractérisé en ce que** ledit composant induisant de l'interférence électromagnétique est une vanne magnétique.

3. Procédé selon la revendication 1 ou 2, **caractérisé en ce qu'**une micro unité de réglage commande ledit capteur et ledit au moins un composant ou détecte et analyse des signaux de commande.

4. Procédé selon une quelconque des revendications précédentes, **caractérisé en ce qu'**une valeur de correction de l'erreur est mise en mémoire en tant qu'une caractéristique statique en fonction du temps.

5. Procédé selon la revendication 4, **caractérisé en ce que** ladite valeur de correction dépend sur la puissance de la tension de commande dudit composant.

6. Procédé selon une quelconque des revendications 1 à 3, **caractérisé en ce qu'**une caractéristique de valeur de correction est établie par voie adaptive.

7. Procédé selon la revendication 6, **caractérisé en ce qu'**à une position extrême de la position ou respectivement de l'angle, les variations dudit signal de capteur, qui sont dues à une erreur, sont détectées et mises en mémoire en tant que des valeurs nouvelles de corrections au cours de l'activation dudit composant.

8. Procédé selon la revendication 7, **caractérisé en ce que** des variations dudit signal de capteur, qui sont détectées au cours de l'activation dudit composant, sont mises en mémoire temporaire et prises en compte en tant que nouvelle caractéristique de valeur de correction s'il est connu que la position réelle n'était pas changée avant et après l'activation dudit composant.

9. Procédé selon la revendication 8, **caractérisé en ce que** lesdites valeurs de correction nouvellement prises en compte sont assujetties au filtrage passe-bas avant leur mise en mémoire en tant que nouvelle caractéristique de valeur de correction.

10. Procédé selon une quelconque des revendications 2 à 9, **caractérisé en ce que** des valeurs de correction de l'erreur sont établies séparément pour les commandes des vannes magnétiques de réglage approximatif et de précision.

11. Procédé selon une quelconque des revendications précédentes, **caractérisé en ce qu'**au cas de plusieurs modules composant/capteur et de l'influence comparable, une valeur de correction établie pour un module composant/capteur est transférée aux autres modules composant/capteur.

12. Procédé selon une quelconque des revendications précédentes, **caractérisé en ce que** ledit composant règle un actionneur d'embrayage.

13. Dispositif à régler une position ou un angle, comprenant au moins un composant actionneur et au moins un capteur de position ou d'angle et au moins une micro unité de réglage, **caractérisé en ce que** des caractéristiques de correction sont aptes à être mise en mémoire dans ladite micro unité de réglage, moyennant desquelles, au cas de l'activation dudit au moins un composant actionneur, des erreurs dans le signal de capteur détecté dudit capteur inductif de position ou d'angle est corrigeable, qui sont induites par interférence électromagnétique agissant de l'extérieur dudit capteur de position ou d'angle.
